(19) Europäisches Patentamt / European Patent Office / Office européen des brevets

(11) **EP 2 932 205 B1**

(12) **EUROPÄISCHE PATENTSCHRIFT**

(45) Veröffentlichungstag und Bekanntmachung des Hinweises auf die Patenterteilung:
**15.09.2021   Patentblatt 2021/37**

(21) Anmeldenummer: **13802347.8**

(22) Anmeldetag: **06.12.2013**

(51) Int Cl.:
*G01F 1/684* (2006.01)     *G01N 25/18* (2006.01)
*G01N 27/18* (2006.01)     *G01F 1/69* (2006.01)
*G01F 5/00* (2006.01)     *G01F 15/02* (2006.01)

(86) Internationale Anmeldenummer:
**PCT/EP2013/075739**

(87) Internationale Veröffentlichungsnummer:
**WO 2014/090691 (19.06.2014 Gazette 2014/25)**

(54) **THERMISCHE DURCHFLUSSMESSVORRICHTUNG UND VERFAHREN ZUR BESTIMMUNG UND/ODER ÜBERWACHUNG EINES DURCHFLUSSES EINES MEDIUMS**

THERMAL FLOW METER AND METHOD FOR DETERMINING AND/OR MONITORING A FLOW RATE OF A MEDIUM

DÉBITMETRE THERMIQUE ET PROCEDE DE DETERMINATION ET/OU DE SURVEILLANCE D'UN DÉBIT D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.12.2012   DE 102012112305**
**10.06.2013   DE 102013105992**

(43) Veröffentlichungstag der Anmeldung:
**21.10.2015   Patentblatt 2015/43**

(73) Patentinhaber: **Endress+Hauser Flowtec AG**
**4153 Reinach (BL) (CH)**

(72) Erfinder:
• **POPP, Oliver**
**CH-4104 Oberwil (CH)**
• **PFAU, Axel**
**CH-4147 Aesch (CH)**
• **BADARLIS, Anastasios**
**CH-4127 Birsfelden (CH)**
• **STEINHOFF, Frank**
**79219 Staufen i. Br. (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 2 381 248          DE-T2- 69 229 799**
**US-A- 5 311 447          US-A- 5 852 238**
**US-A1- 2005 049 805**

**Beschreibung**

Die vorliegende Erfindung betrifft eine thermische Durchflussmessvorrichtung nach dem Oberbegriff des Anspruchs 1 sowie ein Verfahren nach dem Oberbegriff des Anspruchs 7 und eine Verwendung einer thermischen Durchflussmessvorrichtung.

Thermische Durchflussmessvorrichtungen funktionieren in Übereinstimmung mit physikalischen Prinzipien, die aus der Thermodynamik, Strömungslehre, Wärmeübertragung und Materialwissenschaften bekannt sind. Das zugrundeliegende Funktionsprinzip ist, dass je grösser die Durchflussgeschwindigkeit, desto grösser die Wärmeverlustrate des Messwandlers. Diese zwei physikalischen Großen hängen auf funktionale Weise zusammen, wobei dieser Zusammenhang als charakteristische Kurve (oder Kennlinie) dargestellt werden kann. Um so eine Kennlinie zu bestimmen, werden allerdings viele zusätzliche Informationen in Form von Konstanten und Parametern des Mediums und/oder des mindestens ein Messaufnehmer benötigt.

In einer thermischen Durchflussmessvorrichtung wird typischerweise die Leistung zum Betreiben eines beheizbaren Temperatursensors, beispielsweise eines RTD-element (Akronym für Resistance Temperature Detector), gemessen. Unter dieser Leistung ist die dem thermischen Widerstandsthermometer zugeführte Energie pro Zeiteinheit zu verstehen. Nach den oben erwähnten Prinzipien hängt dieser Wert auf funktionale Weise mit der Strömungsgeschwindigkeit oder dem Massenstrom eines Mediums zusammen. Es gibt jedoch auch funktionale Abhängigkeiten zwischen der Leistung und anderen Parametern, wie zum Beispiel der Mediumstemperatur, Viskosität, Reynolds Nummer, etc. Diese Parameter müssen bei der Bestimmung einer Kennlinie zum Zwecke der Durchführung genauer Messungen des Massendurchflusses berücksichtigt werden. Unter gewisse Umstände können eine oder mehrere Parameter aufgrund einer oder mehrerer prozessrelevanter Annahmen selektiv Vernachlässigt werden. Weiterhin sind unter dem Begriff "Berücksichtigen" technischer Auslegungserwägungen und/oder das Einrechnen von zusätzlichen Informationen zu verstehen. Das Einrechnen von zusätzlichen Informationen kann beispielsweise in einem Kalibriervorgang durchgeführt werden.

Die Bestimmung der Kennlinie kann Komplex sein. In thermischen Durchflussmessvorrichtungen gibt es verschiedene prozessrelevante Annahmen, die die Komplexität der Bestimmung einer Kennlinie beschränken können. Zum Beispiel kann angenommen werden, dass eine thermische Durchflussmessvorrichtung mit Mediumstemperaturen, die ausschließlich unter 200 Grad sind, angewendet wird. So können zusätzliche Faktoren, die für eine genaue Charakterisierung der Widerstandsabhängigkeit eines RTD-Elements bei hohen Temperaturen benötigt werden, vernachlässigt werden. Wenn die freie Konvektion von Reynolds- und Prandtl-Nummern charakterisierbar ist, die typischen Durchflussgeschwindigkeiten gut unter einem Drittel der Schallgeschwindigkeit des Mediums bleiben und der Durchfluss nicht bei Unterdruck erfolgt, können die oben gennante Bedingungen entsprechenden Parameter Grashof-Nummer, Mach-Nummer und Knudsen-Nummer vernachlässigt werden. Weiterhin kann die Bestimmung der Kennlinie vereinfacht werden, indem zum Beispiel der Einfluss von Temperaturschwankungen in dem Medium durch ein zweites Temperatursorelement berücksichtigt wird oder eine Messunsicherheit des Durchflusswerts, die beispielsweise durch Turbulenz des Mediums erzeugt wird, durch angepasste Platzierung der Durchflussmessvorrichtung (z.B. Weit entfernt von Turbulenz erzeugenden Abschnitten einer Durchflussleitung oder Durchflussleitungssystem) oder durch die Anwendung eines Durchflusskonditionierungselements, das in Bezug auf die Strömungsrichtung des Mediums vorgelagert ist, verringert wird. Um weitere Informationen zu beschaffen wird typischerweise eine Kalibrierung unter spezifischen Bedingungen bei Inbetriebnahme oder vor der Lieferung durchgeführt. Bei einer Kalibrierung können verschiedene Konstanten bestimmt werden. Weiterhin ermöglicht eine Kalibrierung in manchen Fällen die Anpassung einer polynomialen Funktion an die Kennlinie, was unter anderem dazu führt, die Berechnungskomplexität und den Berechnungsaufwand von den Berechnungen, die in der Messvorrichtung erfolgen, zu verringern.

Zur Bestimmung einer Kennlinie für eine thermische Durchflussmessvorrichtung werden trotz dieser Erwägungen, ausgeführt nach der bisher beschriebenen Weise, dennoch weiterer Informationen über mediumsspezifische Eigenschaften benötigt.

Bislang sind die Auswertungsprozesse einer thermische Durchflussmessvorrichtungen von der Vorgabe von mediumsspezifischen Eigenschaften, wie beispielsweise der spezifischen Wärmekapazität, der Wärmeleitfähigkeit, der Temperaturleitfähigkeit, der Dichte und/oder der dynamische Viskosität des Mediums, abhängig.

Diese Vorgabe kann durch manuelle Eingabe erfolgen. Problematisch dabei ist, dass bei einem Mediumswechsel oder bei einer Echtzeitmessung von einem Medium mit zeitlich-variablen Zusammensetzungen erst eine Umstellung der Messbedingungen durch erneute manuelle Eingabe der mediumseigenschaften erfolgen muss.

In DE 692 29 799 T2 ist eine Lösung beschrieben, wobei ein Fluidmassenstrommesser folgendes umfasst:

- ein Mittel zum Speichern einer vorgegebenen Darstellung der Beziehung zwischen der Reynolds-Zahl und der Nusselt-Zahl, wobei die Beziehung aus Versuchsdaten abgeleitet wird, die dadurch bestimmt werden, dass mindestens ein bekanntes Fluid bei jeder einer Mehrzahl von Stromgeschwindigkeiten und bei jedem eines Spektrums von Energieniveaus durch den Strommesser geleitet wird,

- ein Mittel zum Berechnen einer Zielfluidfilmtemperatur aus den gemessenen Messwandler- und Fluidtemperaturen, wobei die Filmtemperatur die Temperatur des Zielfluids angrenzend an den Messwandler darstellt,
- ein Mittel zum Speichern von Zielfluiddaten, die die Schwankung der Zielfluidviskosität und der Zielfluid-Wärmeleitfähigkeit mit der Temperatur darstellen,
- ein Mittel zum Berechnen der Zielfluidviskosität und der Zielfluid-Wärmeleitfähigkeit aus den gespeicherten Zielfluiddaten und der Filmtemperatur,
- ein Mittel zum Berechnen der Nusselt-Zahl für das Zielfluid aus der gemessenen Energiezufuhrgeschwindigkeit, der Differenz zwischen der gemessenen Messwandlertempertur und der gemessenen Fluidtemperatur und der berechneten Wärmeleitfähigkeit,
- ein Mittel zum Berechnen der Reynolds-Zahl für das Zielfluid aus der berechneten Nusselt-Zahl und der genannten Beziehung und ein Mittel zum Berechnen des Massenstroms aus der berechneten Reynolds-Zahl und der berechneten Viskosität.

Bei dieser Lösung besteht jedoch weiterhin das Problem, dass im Fall eines Mediumswechsels keine fehlerfreie Echtzeitmessung möglich ist, da ein Wechsel das Mediums erst erkannt werden muss, um den Strommesser einzurichten, so dass die passenden gespeicherten Zielfluiddaten abgerufen werden. Weiterhin kann es vorkommen, dass die genaue Zusammensetzung eines Mediums/Zielfluids unbekannt ist und/oder dass keine Versuchsdaten für die medienspezifischen Eigenschaften bei manchem Zustande vorliegen oder dass ein fehlerhaftes Auftreten eines eindringenden Mediums unbemerkt die Zusammensetzung des Mediums verändert.

Es ist daher die Aufgabe der Erfindung, eine thermische Durchflussmessvorrichtung zur Bestimmung und/oder Überwachung eines Durchflusses bereitzustellen, die ohne manuelle Vorgabe von mediumspezifischen Eigenschaften oder Zusammensetzung des Mediums eine Echtzeitmessung ausführen kann.

Die vorliegende Erfindung löst diese Aufgabe durch das Bereitstellen einer thermischen Durchflussmessvorrichtung mit den Merkmalen des Anspruchs 1 und durch das Bereitstellen eines Verfahrens mit den Merkmalen des Anspruchs 7.

Erfindungsgemäß weist die thermische Durchflussmessvorrichtung zur Bestimmung und/oder Überwachung eines Durchflusses eines Mediums durch ein Messrohr zumindest zwei Temperatursensoren auf, wobei ein erster Temperatursensor beheizbar ist, wobei ein zweiter Temperatursensor dazu dient, die Temperatur des Mediums bereitzustellen, dadurch gekennzeichnet, dass die thermische Durchflussmessvorrichtung zumindest einen Messaufnehmer zur Ermittlung der Mediumseigenschaften Wärmeleitfähigkeit, Wärmekapazität, Dichte und dynamische Viskosität oder Wärmeleitfähigkeit, Temperaturleitfähigkeit, Dichte und dynamische Viskosität aufweist.

Durch die Nutzung einer oder mehrerer Messaufnehmer zur Ermittlung der Wärmeleitfähigkeit, der Wärmekapazität, der Temperaturleitfähigkeit, der Dichte und dynamischen Viskosität des Mediums kann ein Mediumswechsel oder auch nur eine geringe Konzentrationsänderung detektiert und die Durchflussmessung auf die geänderten Bedingungen eingestellt werden. Die zumindest einer Messaufnehmer ermittelt, zumindest die Wärmeleitfähigkeit, die Wärmekapazität, die Dichte und die dynamische Viskosität oder zumindest die Wärmeleitfähigkeit, die Temperaturleitfähigkeit, die Dichte und die dynamische Viskosität. Weitere Informationen bezüglich der mediumseigenschaftsbezogenen Werte des Mediums werden dadurch nicht mehr benötigt.

Darüber hinaus kann bei kontinuierlicher Messung oder bei Messungen der mediumseigenschaftsbezogenen Werte des Mediums in kurzen Intervallraten eine Echtzeitmessung ermöglicht werden, also eine Anpassung der ermittelten Durchflusswerte an das Medium in seiner aktuellen Mediumszusammensetzung. Mit den ermittelten Messdaten können bei Bedarf Prozessbedingungen gesteuert werden, so dass durch eine entsprechende Prozesssteuerung kurzfristig auf Veränderungen in der Anlage reagiert werden kann.

Erfindungsgemäß weist die die thermische Durchflussmessvorrichtung eine Auswerteeinheit auf, die dazu dient, anhand der Leistung zum Betreiben des beheizbaren Temperatursensors und des Temperaturunterschieds zwischen den zumindest zwei Temperatursensoren unter Zuhilfenahme der ermittelten Mediumseigenschaften die Durchflussgeschwindigkeit und/oder den Durchfluss des Mediums durch das Messrohr zu ermitteln.

Durch die Auswerteeinheit kann eine Korrektur ohne weitere Zusatzgeräte vorgenommen werden, was einen kompakten Geräteaufbau gewährleistet und zu einer Kostenersparnis gegenüber einer Vielzahl von Auswerteeinheiten führt.

Gemäß der Ausgestaltung der erfindungsgemäßen thermischen Durchflussmessvorrichtung weist die Auswerteeinheit ein Mittel auf, das dazu dient, eine Berechnung einer charakteristischen Kurve anhand der ermittelten Mediumseigenschaften auszuführen, wobei die charakteristische Kurve insbesondere eine Kennlinie ist, wobei diese Kennlinie dazu dient, einen funktionalen Zusammenhang zwischen der Leistung zum Betreiben des beheizbaren Temperatursensors und dem Durchfluss des Mediums durch das Messrohr bereitzustellen.

Gemäß einer vorteilhaften Ausgestaltung der erfindungsgemäßen thermischen Durchflussmessvorrichtung ist vorgesehen, dass die thermische Durchflussmessvorrichtung so ausgestaltet ist, dass die Ermittlung der Mediumseigenschaften und die Berechnung einer charakteristischen Kurve innerhalb eines Zeitraums der weniger als 1 s beträgt, vorzugsweise weniger als 30 ms, auszuführen sind. In diesem Zeitraum ist es dem Endverbraucher üblicherweise nicht möglich, die Durchflussmessvorrichtung manuell auf die geänderten Bedingungen einzustellen.

In einer Weiterbildung der erfindungsgemäßen thermischen Durchflussmessvorrichtung ist der zumindest eine Messaufnehmer dazu ausgelegt, jeweils eines Wertes der Mediumseigenschaften Wärmeleitfähigkeit, Wärmekapazität, Dichte und dynamische Viskosität oder Wärmeleitfähigkeit, Temperaturleitfähigkeit, Dichte und dynamische Viskosität zu ermitteln. Das Bereitstellen dieser Werte ermöglicht die Erkennung des Mediums vermittels der thermischen Durchflussmessvorrichtung.

In einer vorteilhaften Möglichkeit der Realisierung der erfindungsgemäß thermischen Durchflussmessvorrichtung ist der zumindest eine Messaufnehmer oder alle Messaufnehmer zur Ermittlung der Wärmeleitfähigkeit und/oder der Wärmekapazität und/oder der Temperaturleitfähigkeit und/oder der Dichte und/oder der dynamische Viskosität des Mediums in oder an einem Bypass des Messrohres angeordnet.

Ein Bypass zeichnet sich in seiner einfachsten konstruktiven Bauweise durch eine Abführung von einer Hauptleitung und einer Rückführung zur Hauptleitung, in diesem Fall dem Messrohr, aus. In einem erfindungsgemäßen Ausführungsbeispiel wird dem Bypass eine leichtere Auswechselbarkeit der Messaufnehmer im Falle eines Defekts ermöglicht. Der Bypass kann einfach angeschlossen werden, während die fehlerhaften Geräte ausgetauscht werden. In dieser Zeit erfolgt keine Korrektur der Durchflusswerte, so dass die Durchflusswerte zu diesem Zeitpunkt lediglich mit dem letzten Korrekturwert vor der Reparatur gemessen werden können.

Eine weitere vorteilhafte Möglichkeit der Realisierung der thermischen Durchflussmessvorrichtung ist, dass der zumindest eine Messaufnehmer oder alle Messaufnehmer zur Ermittlung der Wärmeleitfähigkeit und/oder der Wärmekapazität und/oder der Temperaturleitfähigkeit und/oder der Dichte und/oder der dynamische Viskosität des Mediums in das Messrohr integriert sind. Vermittels diese Ausführungsform kann einer Messfehler verringert oder vermeiden werden, wobei der Messfehler aufgrund von Abweichungen in der Zusammensetzung des Mediums an verschiedenen Stellen im Prozess auftret.

In einer Weiterbildung der thermischen Durchflussmessvorrichtung wird die zumindest eine Messaufnehmer oder alle Messaufnehmer an einem stabförmigen Einsatz angeordnet, welcher in das Messrohr hineinragt, insbesondere radial in das Messrohr hineinragt. In diesem Fall besteht die Möglichkeit, bestimmte Eigenschaften (wie beispielsweise Turbulenz) des Durchflusses zu berücksichtigen.

Erfindungsgemäß weist ein Verfahren zur Bestimmung und/oder Überwachung eines Durchflusses eines Mediums durch ein Messrohr vermittels der Durchflussmessvorrichtung nach einem der Ansprüche 1 bis 6 den folgenden Schritt auf:

- Ermitteln jeweils eines Werts der Mediumseigenschaften Wärmeleitfähigkeit, Wärmekapazität, Dichte und dynamische Viskosität oder Wärmeleitfähigkeit, Temperaturleitfähigkeit, Dichte und dynamische Viskosität,

- Berechnen einer charakteristischen Kurve anhand mediumseigenschaftenbezogener Werte,
- Ermitteln der Durchfluss des Messmediums anhand der charakteristischen Kurve und der Leistung zum Betreiben des beheizbaren Temperatursensors und des Temperaturunterschieds zwischen den zumindest zwei Temperatursensoren.

Die Ermittlung von den oben genannten thermischen Eigenschaften Wärmeleitfähigkeit, Wärmekapazität und Temperaturleitfähigkeit kann durch verschiedene Verfahren wie beispielsweise durch die 3-Omega-Methode, durch das transiente Hitzedrahtverfahren (von der englischen "transient hot wire method"), durch die Temperaturoszillationsmethode (von der englischen "temperature oscillation technique") und/oder durch optische Verfahren wie Fotothermal und Fotoakustisch erfolgen. Die Ermittlung von Viskosität kann beispielsweise durch oszillierende, vibrierende und/oder kapillare Messaufnehmer erfolgen. Weiterhin sind optische Verfahren zur Bestimmung von Viskosität z.B. basierend auf "Frequency Domain Time Resolved Florescence Anistropy" (Frequenzbereich zeitaufgelöster Fluoreszenz Anisotropie) bekannt.

Gemäß einer bevorzugten Weiterbildung des Verfahrens werden die ermittelten mediumseigenschaftsbezogenen Werte in kontinuierlich oder diskontinuierlich wiederkehrenden Messungen ermittelt und es erfolgt eine Anpassung der durchflussbezogenen Werte anhand der aktuell ermittelten mediumseigenschaftsbezogenen Werte.

Durch die stetige Neuanpassung der Durchflussbedingungen an die ständig wechselnden Mediumseigenschaften des Mediums ermöglicht die thermische Durchflussmessvorrichtung eine genauere Massenbilanzierung.

Erfindungsgemäß wird die thermische Durchflussmessvorrichtung, nach einem der Ansprüche 1-6 mit dem Verfahren nach einem der Ansprüche 7-8, zur Ermittlung der Durchflussgeschwindigkeit eines Mediums mit zeitlich veränderlicher Zusammensetzung und/oder zur Erkennung eines Mediumswechsels im Messbetrieb der thermischen Durchflussmessvorrichtung verwendet.

Die Erfindung soll nachfolgend im Detail anhand mehrerer Ausführungsbeispiele näher erläutert werden. Sie zeigen:

Fig.1    ein erstes Ausführungsbeispiel einer thermischen Durchflussmessvorrichtung;

Fig.2    ein zweites Ausführungsbeispiel einer thermischen Durchflussmessvorrichtung.

Herkömmliche thermische Durchflussmessvorrichtungen verwenden üblicherweise zwei möglichst gleichartig ausgestaltete beheizbare Widerstandsthermometer, die in, meist stiftförmigen Metallhülsen, sog. Stingers, oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, das mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, das durch Umsetzung einer elektrischen Leistung, z. B. durch eine entsprechende Variation des Messstroms, erwärmt wird. Bei dem zweiten Widerstandsthermometer handelt es sich um ein sog. passives Sensorelement: Es misst die Temperatur des Mediums.

Üblicherweise wird in einer thermischen Durchflussmessvorrichtung ein beheizbares Widerstandsthermometer so beheizt, dass sich eine feste Temperaturdifferenz zwischen den beiden Widerstandsthermometern einstellt. Alternativ ist auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometers wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr.

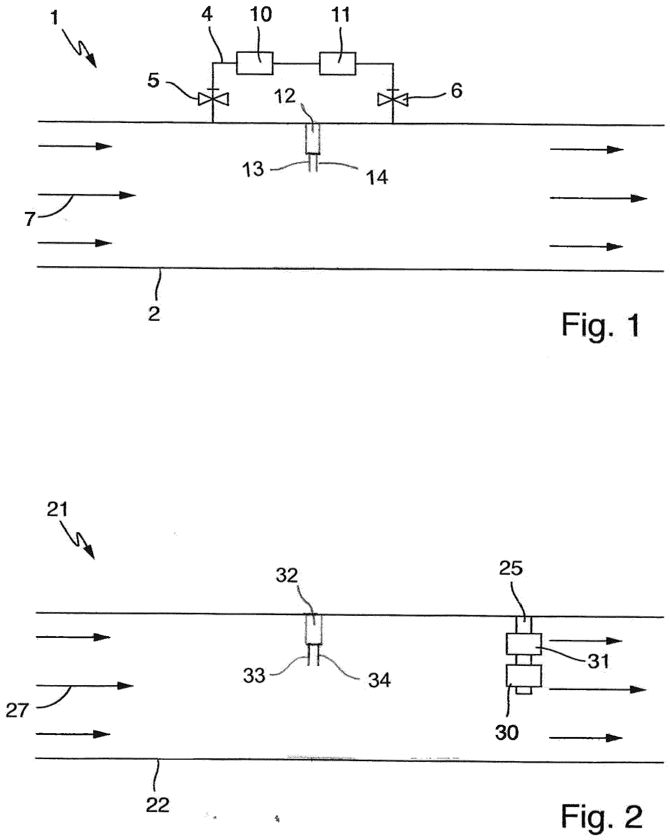

Fig. 1 zeigt ein erstes Ausführungsbeispiel einer erfindungsgemäßen thermischen Durchflussmessvorrichtung 1 zur Bestimmung und/oder Überwachung eines Durchflusses eines Mediums durch ein Messrohr 2 mit unbekannter Wärmeleitfähigkeit, Wärmekapazität, Dichte und dynamischer Viskosität oder Wärmeleitfähigkeit, Temperaturleitfähigkeit, Dichte und dynamischer Viskosität.

Die Durchflussmessvorrichtung 1 weist ein Messrohr 2 auf, welches durch Flansche oder flanschlos in einer Prozessleitung angeordnet ist.

In das Messrohr 2 ist eine stabförmige Einheit 12 mit einem Temperatursensor 13 und einem beheizbaren Temperatursensor 14 angeordnet. Die Temperatursensoren 13, 14 können in einem Abstand x in das Messrohr 2 hineinragen, so dass die Messung im Bereich des Zentrums der Strömung 7 erfolgt. Andere Anordnungen der Temperatursensoren 13, 14 sind auch möglich. Beispielsweise können die Temperatursensoren 13, 14 separat in das Messrohr 2 hineinragen.

In dem in Fig. 1 dargestellten Ausführungsbeispiel weist das Messrohr 2 einen Bypass 4 auf. In diesen Bypass 4 kann ein Teil des Mediums zur Bestimmung der Mediumseigenschaften - insbesondere der Dichte, der Wärmeleitfähigkeit, der Wärmekapazität, der dynamischen Viskosität und der Temperaturleitfähigkeit - eingeleitet werden.

Der Volumenstrom des in den Bypass 4 abgeleiteten Mediums beträgt vorzugsweise weniger als 2%, besonders bevorzugt weniger als 0,5%, des Gesamtvolumenstroms im Messrohr 2, um einen Druckabfall möglichst gering zu halten.

Die Mediumseigenschaften können, je nach Bedarf, kontinuierlich bestimmt werden oder - wie in Fig. 1 dargestellt- lediglich in vorbestimmten Zeiträumen.

Der Bypass 4 weist ein Einlass- und ein Auslassventil 5 und 6 auf. Bei geschlossenem Einlassventil 5 erfolgt kein Druckabfall im Messrohr 2. Bei geöffnetem Einlassventil 5 ist der Druckabfall aufgrund des geringen abgezweigten Volumenstroms lediglich gering.

Zwischen dem Einlass- und dem Auslassventil 5 und 6 sind am Bypass 4 jeweils ein Messaufnehmer zur Bestimmung der Temperaturleitfähigkeit und/oder der Wärmekapazität und/oder der Wärmeleitfähigkeit 10 und ein Messaufnehmer zur Bestimmung der Dichte und/oder der dynamischen Viskosität 11 angeordnet.

Fig. 2 zeigt ein weiteres Ausführungsbeispiel einer thermischen Durchflussmessvorrichtung 21 mit einem Messrohr 22 und einer stabförmigen Einheit 32 mit einem Temperatursensor 33 und ein beheizbarer Temperatursensor 34. Das Messrohr 22 weist einen stabförmigen Einsatz 25 auf, welcher ausgehend von der Innenwandung des Messrohres 22 in die Strömung 27 ragt. Am stabförmigen Einsatz 25 ist ein Messaufnehmer zur Bestimmung der Temperaturleitfähigkeit und/oder der Wärmeleitfähigkeit 30 und ein Messaufnehmer zur Bestimmung der Dichte 31 angeordnet, wobei die Messaufnehmer zur Bestimmung der Temperaturleitfähigkeit und/oder der

Wärmeleitfähigkeit des Mediums 30 einen geringeren radialen Abstand zur Messrohrachse des Messrohres 22 aufweist als die Messaufnehmer zur Bestimmung der Mediumsdichte 31.

Andere Ausführungsformen sind auch denkbar, wobei z.B. die RTD Elemente auch in einem Bypass 4 des Messrohrs angeordnet sind.

Die Messaufnehmer 10, 11, 30, 31 in den Figuren 1 und 2 sind an sich bekannt, allerdings bewirkt deren Nutzung in einer thermischen Durchflussmessvorrichtung 1, 21, dass eine Echtzeitmessung ermöglicht wird oder ein Mediumswechsel im Messrohr 2,22 frühzeitig detektiert wird.

Die in den Figuren 1 und 2 abgebildeten Messaufnehmer zur Bestimmung der Wärmeleitfähigkeit 10, 30 können vorzugsweise nach einer der Methoden arbeiten, wie sie im Detail im Zusammenhang mit der Wärmeleitfähigkeitsbestimmung von Nanofluiden durch G.Paul et al in "Renewable and Sustainable Energy Reviews" 14 (2010) 1913-1924 beschrieben werden und auf dessen Inhalt vollumfänglich verwiesen wird.

Ein bevorzugter Messaufnehmer zur Bestimmung der Wärmeleitfähigkeit 10, 30 arbeitet nach der "temperature oscillation technique". Der Grundaufbau der Messaufnehmer 10, 30 besteht aus einer Messzelle, welche an ihren Enden durch Kühlwasser gekühlt wird. Ein in der Messzelle angeordnetes Peltier Element wird durch eine externe Stromquelle betrieben. Die Temperatur wird durch eine Reihe von Thermoelementen ermittelt, wobei das Messsignal zusätzlich durch einen Verstärker verstärkt werden kann. Die Messsignale werden in einer Auswerteeinheit gesammelt und durch Auswertesoftware verglichen.

Bei der Temperaturoszillationsmethode wird auf diese Weise die zeitliche Temperaturänderung des Mediums gemessen, wenn es einer Temperaturänderung oder einem Wärmestrom ausgesetzt ist. Die ermittelte zeitliche Temperaturänderung des Mediums ist das Ergebnis der gemittelten oder lokalen Wärmeleitfähigkeit in Richtung der Breite oder Höhe der Messzelle, in welcher sich das Medium befindet.

Durch die Amplitudendämpfung der thermischen Oszillation kann sowohl die Wärmeleitfähigkeit k als auch die Temperaturleitfähigkeit $\alpha$ ermittelt werden.

Ebenso wie die Messaufnehmer zur Bestimmung der Temperaturleitfähigkeit und/oder der Wärmeleitfähigkeit 10, 30 sind auch Messaufnehmer zur Bestimmung der Dichte 11, 31 eines Mediums, wie sie in den Figuren 1 und 2 abgebildet sind, hinreichend bekannt.

Hierzu können vibrierende Objekte genutzt werden, beispielsweise vibrierende Platten. Entsprechende Verfahren und Messaufnehmer zur Bestimmung der Dichte 11, 31 sind an sich bekannt und werden u.a. im Artikel "A review of vibrating objects for the measurement of density and viscosity in oilfields including devices fabricated by the method of MEMS" von Wakeham et al, High Temperatures - High Pressures, Vol. 37 pp. 137-151 beschrieben. Selbstverständlich sind die hierin offenbarten Techniken auch geeignet zur Bestimmung der Dichte anderer Medien als Rohöl. Methoden auf Basis von vibrierenden Platten und Kragbalken oder Quarzkristallresonatoren sind bekannt. Die vorgenannten Methoden ermöglichen zudem auch die Bestimmung der Viskosität.

Darüber hinaus ist es auch möglich die Dichte von verschiedenen Medien über Scherversuche herauszufinden. Ebenso ist es möglich, die Viskosität vermittels eines MOVS (Mikro-Optische-Viskosität System) zu bestimmen.

Der folgende Zusammenhang ist bekannt:

$$\alpha = \frac{k}{\rho c_p}$$

für

$\alpha$ = Temperaturleitfähigkeit des Mediums [m²/s]
$k$ = Wärmeleitfähigkeit des Mediums [W/(m*K)]
$\rho$ =Dichte des Mediums [kg/m³];
$c_p$=spezifische Wärmekapazität des Mediums [J/(kg*K)].

In Fällen, in denen die spezifische Wärmekapazität $c_p$ unbekannt ist, ermöglicht dieser Zusammenhang deren Ermittlung aufgrund der von dem mindestens ein Messaufnehmer ermittelten Temperaturleitfähigkeit, Wärmeleitfähigkeit und Dichte des Mediums.

Allgemein gesprochen kann die Leistung zum Betreiben des beheizbaren Temperatursensors 14, 34 (weiterhin PC genannt) beispielsweise wie folgt mit der Durchflussgeschwindigkeit des Mediums korreliert werden:

Angenommen der beheizbare Temperatursensor 14, 34 bewahrt keine Energie auf, ist PC gleich der Wärmeübertragung (q$_C$) von dem Temperatursensor 14, 34 in das Medium. Die Wärmeübertragung ist proportional der Oberfläche (A) des Temperatursensors 14, 34 und der Temperaturdifferenz (ΔT) zwischen Temperatursensoren 13, 33 und 14, 34. Die Proportionalitätskonstante heißt Wärmeübertragungszahl (h) und kann als abhängig von der Nusselt Nummer (Nu) formuliert werden.

Eine Kennlinie kann dann auf eine empirische Korrelation zwischen Nusselt- (Nu), Reynolds- (Re) und Prandtl- (Pr) Nummern basieren, wobei Nu, Re und Pr dimensionslose Parameter sind und die mediumseigenschaftsbezogenen Werte Viskosität und Dichte für die Reynolds Nummer benötigt werden, die spezifische Wärmekapazität des Mediums für die Prandtl Nummer benötigt wird und die Wärmeleitfähigkeit für die Nusselt und Prandtl Nummern benötigt wird.

Am Ende ergibt sich ein funktionaler Zusammenhang zwischen der Leistung (PC) und der mediumseigenschaftsbezogenen Werte Wärmekapazität, Wärmeleitfähigkeit, Dichte und Viskosität. Die Messaufnehmer 10, 11, 30, 31 werden benutzt, um diese Werte ohne manuelle Eingabe, mitzuteilen.

Durch die Nutzung dieser Messaufnehmer 10, 11, 30, 31 kann eine kurze Messstrecke erreicht werden, so dass beispielsweise ein Mediumswechsel im Messbetrieb sofort detektiert und ausgewertet werden kann.

Außerdem ist eine sogenannte Echtzeitmessung bei Medien mit ständig wechselnden Zusammensetzungen möglich. Typische Medien sind hierbei beispielsweise Biogas, Erdgas oder Produkt/Edukt-Gemische im Reaktorbetrieb.

Als Echtzeitmessung (real-time measurement) im Sinne der vorliegenden Erfindung wird eine Adaptierung der Messbedingungen innerhalb eines kurzen Zeitraums nach der Erkennung von wechselnden Mediumseigenschaften (Zusammensetzung oder vollständiger Mediumswechsel) bezeichnet. Der kurze Zeitraum beträgt dabei weniger als 1 s, vorzugsweise weniger als 30 ms. In diesem Zeitraum ist es dem Endverbraucher üblicherweise nicht möglich, die Durchflussmessvorrichtung 1, 21 manuell auf die geänderten Bedingungen einzustellen.

**Patentansprüche**

1. Thermische Durchflussmessvorrichtung (1,21) zur Bestimmung und/oder Überwachung eines Durchflusses eines Messmediums durch ein Messrohr (2,22), wobei die Durchflussmessvorrichtung(1,21) zumindest zwei Temperatursensoren (13, 14, 33, 34) aufweist, wobei ein erster Temperatursensor (14, 34) beheizbar ist, wobei ein zweiter Temperatursensor (13, 33) dazu dient, die Temperatur des Messmediums bereitzustellen, **dadurch gekennzeichnet, dass** die thermische Durchflussmessvorrichtung (1,21) zumindest einen Messaufnehmer (10, 11, 30, 31) zur Ermittlung der Mediumseigenschaften Wärmeleitfähigkeit, Wärmekapazität, Dichte und dynamische Viskosität oder Wärmeleitfähigkeit, Temperaturleitfähigkeit, Dichte und dynamische Viskosität aufweist, wobei die thermische Durchflussmessvorrichtung(1,21) eine Auswerteeinheit aufweist, die dazu dient, anhand der Leistung zum Betreiben des beheizbaren Temperatursensors (14, 34) und des Temperaturunterschieds zwischen den zumindest zwei Temperatursensoren (13, 14, 33, 34) unter Zuhilfenahme der ermittelten Mediumseigenschaften die Durchflussgeschwindigkeit und/oder den Durchfluss des Messmediums durch das Messrohr (2,22) zu ermitteln, und wobei die Auswerteeinheit ein Mittel aufweist, das dazu dient, eine Berechnung einer charakteristischen Kurve anhand der ermittelten Mediumseigenschaften auszuführen, wobei die charakteristischen Kurve eine Kennlinie ist, wobei diese Kennlinie dazu dient, einen funktionalen Zusammenhang zwischen der Leistung zum Betreiben des beheizbaren Temperatursensors (14, 34) und dem Durchfluss des Messmediums durch das Messrohr (2,22) bereitzustellen.

2. Thermische Durchflussmessvorrichtung (1,21) nach Anspruch 3, **dadurch gekennzeichnet, dass** die thermische Durchflussmessvorrichtung (1,21) so ausgestaltet ist, die Ermittlung von Mediumseigenschaften und die Berechnung einer charakteristischen Kurve innerhalb eines Zeitraums der weniger als 1s beträgt, vorzugsweise weniger als 30ms, auszuführen.

3. Thermische Durchflussmessvorrichtung (1,21) nach einem der vorhergehenden Ansprüche, **dadurch gekennzeichnet, dass** der zumindest eine Messaufnehmer (10, 11, 30, 31) jeweils einen Wert der Mediumseigenschaften Wärmeleitfähigkeit, Wärmekapazität, Dichte und dynamische Viskosität oder Wärmeleitfähigkeit, Temperaturleitfähigkeit, Dichte und dynamische Viskosität ermittelt.

4. Thermische Durchflussmessvorrichtung (1,21) nach einem der vorhergehenden Ansprüche, **dadurch gekennzeichnet, dass** der zumindest eine Messaufnehmer (10, 11, 30, 31) oder alle Messaufnehmer (10, 11, 30, 31) zur Ermittlung der Wärmeleitfähigkeit und/oder der Wärmekapazität und/oder der Temperaturleitfähigkeit und/oder der Dichte und/oder der dynamischen Viskosität des Messmediums in oder an einem Bypass (4) des Messrohres (2,22) angeordnet sind.

5. Thermische Durchflussmessvorrichtung (1,21) nach einem der vorhergehenden Ansprüche, **dadurch gekennzeichnet, dass** die zumindest eine Messaufnehmer (10, 11, 30, 31) oder alle Messaufnehmer (10, 11, 30, 31) zur Ermittlung der Wärmeleitfähigkeit und/oder der Wärmekapazität und/oder der Temperaturleitfähigkeit und/oder der Dichte und/oder der dynamische Viskosität des Messmediums in das Messrohr (2,22) integriert sind.

6. Thermische Durchflussmessvorrichtung (1, 21) nach Anspruch 7, **dadurch gekennzeichnet, dass** der zumindest eine Messaufnehmer (10, 11, 30, 31) oder alle Messaufnehmer (10, 11, 30, 31) an einem stabförmigen Einsatz (25) angeordnet sind, welcher in das Messrohr (2,22) hineinragt, insbesondere radial in das Messrohr (2,22) hineinragt.

7. Verfahren zur Bestimmung und/oder Überwachung eines Durchflusses eines Messmediums durch ein Messrohr (2,22) vermittels der Durchflussmessvorrichtung (1, 21) nach einem der Ansprüche 1 bis 6, umfassend der folgenden Schritt:

   - Ermitteln jeweils eines Werts der Mediumseigenschaften Wärmeleitfähigkeit, Wärmekapazität, Dichte und dynamische Viskosität oder Wärmeleitfähigkeit, Temperaturleitfähigkeit, Dichte und dynamische Viskosität,
- Berechnen einer charakteristischen Kurve anhand mediumseigenschaftenbezogener Werte,
- Ermitteln der Durchfluss des Messmediums anhand der charakteristischen Kurve und der Leistung zum Betreiben des beheizbaren Temperatursensors (14, 34) und des Temperaturunterschieds zwischen den zumindest zwei Temperatursensoren (13, 14, 33, 34).

8. Verfahren nach Anspruch 7, **dadurch gekennzeichnet, dass** die ermittelten mediumseigenschaftsbezogenen Werte in kontinuierlich oder diskontinuierlich wiederkehrenden Messungen ermittelt werden und eine Anpassung der durchflussbezogenen Wert anhand der aktuell ermittelten mediumseigenschaftsbezogenen Werte erfolgt.

9. Verwendung einer thermischen Durchflussmessvorrichtung (1, 21) nach einem der Ansprüche 1-6 mit einem Verfahren nach einem der Ansprüche 7-8, zur Ermittlung der Durchflussgeschwindigkeit eines Messmediums mit zeitlich veränderlicher Zusammensetzung und/oder zur Erkennung eines Mediumswechsels im Messbetrieb der thermischen Durchflussmessvorrichtung (1, 21).

**Claims**

1. Thermal flow measuring unit (1, 21) designed to determine and/or monitor a flow of a medium flowing through a measuring tube (2, 22), wherein the flow measuring unit (1, 21) has at least two temperature sensors (13, 14, 33, 34), wherein a first temperature sensor (14, 34) can be heated, wherein a second temperature sensor (13, 33) is used to make the temperature of the medium to be measured available,

   **characterized in that** the thermal flow measuring unit (1, 21) comprises at least a sensor (10, 11, 30, 31) designed to determine the following properties of the medium: thermal conductivity, thermal capacity, density and dynamic viscosity or thermal conductivity, thermal diffusivity, density and dynamic viscosity, wherein the thermal flow measuring unit (1, 21) has an evaluation unit, which serves to determine the flow velocity and/or the flow of medium flowing through the measuring tube (2, 22) on the basis of the power required to operate the heatable temperature sensor (14, 34) and the temperature difference between the at least two temperature sensors (13, 14, 33, 34) using the determined medium properties, and wherein the evaluation unit has a means to calculate a characteristic curve using the determined medium properties, wherein the characteristic curve is a characteristic line, wherein said characteristic line serves to provide a functional correlation between the power required to operate the heatable temperature sensor (14, 34) and the flow of medium flowing through the measuring tube (2, 22).

2. Thermal flow measuring unit (1, 21) as claimed in Claim 3, **characterized in that** the thermal flow measuring unit (1, 21) is designed to determine the properties of the medium and to calculate a characteristic curve in a time period that is less than 1 s, preferably less than 30 ms.

3. Thermal flow measuring unit (1, 21) as claimed in one of the previous claims, **characterized in that** the at least one sensor (10, 11, 30, 31) determines a value of one of the following medium properties: thermal conductivity, thermal capacity, density and dynamic viscosity or thermal conductivity, thermal diffusivity, density and dynamic viscosity.

4. Thermal flow measuring unit (1, 21) as claimed in one of the previous claims, **characterized in that** the at least one sensor (10, 11, 30, 31) or all the sensors (10, 11, 30, 31) designed to determine the thermal conductivity and/or the thermal capacity and/or the thermal diffusivity and/or the density and/or the dynamic viscosity of the medium are arranged in or on a bypass (4) of the measuring tube (2, 22).

5. Thermal flow measuring unit (1, 21) as claimed in one of the previous claims, **characterized in that** the at least one sensor (10, 11, 30, 31) or all the sensors (10, 11, 30, 31) designed to determine the thermal conductivity and/or the thermal capacity and/or the thermal diffusivity and/or the density and/or the dynamic viscosity of the medium are integrated in the measuring tube (2, 22).

6. Thermal flow measuring unit (1, 21) as claimed in Claim 7, **characterized in that** the at least one sensor (10, 11, 30, 31) or all the sensors (10, 11, 30, 31) are arranged on a rod-shaped insert (25) which projects into the measuring tube (2, 22), particularly in a radial manner.

7. Procedure designed to determine and/or monitor a flow of a medium flowing through a measuring tube (2, 22) by means of the flow measuring unit (1, 21) as claimed in one of the Claims 1 to 6, comprising the following steps:

   - Determination of a value for each of the following medium properties: thermal conductivity, thermal capacity, density and dynamic viscosity or thermal conductivity, thermal diffusivity, density and dynamic viscosity,
- Calculation of a characteristic curve using values related to the medium properties,
- Determination of the flow of the medium using the characteristic curve and the power required to operate the heatable temperature sensor (14, 34) and the temperature difference between the at least two temperature sensors (13, 14, 33, 34).

8. Procedure as claimed in Claim 7, **characterized in that** the determined values which refer to medium properties are determined in continuously or discontinuously recurring measurements and **in that** the flow-related value is adjusted on the basis of the values related to the medium properties which are currently determined.

9. Use of a thermal flow measuring unit (1, 21) as claimed in one of the Claims 1-6, with a procedure as claimed in one of the Claims 7-8, to determine the flow velocity of a medium with a composition that varies over time, and/or to detect a change in the medium when the thermal flow measuring unit (1, 21) is in the measuring mode.


**Revendications**

1. Dispositif de mesure de débit thermique (1, 21) destiné à la détermination et/ou à la surveillance d'un débit d'un produit s'écoulant à travers un tube de mesure (2, 22), le dispositif de mesure de débit (1, 21) présentant au moins deux capteurs de température (13, 14, 33, 34), un premier capteur de température (14, 34) pouvant être chauffé, un deuxième capteur de température (13, 33) servant à mettre à disposition la température du produit,

    **caractérisé en ce que** le dispositif de mesure de débit thermique (1, 21) comprend au moins un capteur (10, 11, 30, 31) destiné à la détermination des propriétés du produit suivantes : conductibilité thermique, capacité thermique, densité et viscosité dynamique ou conductibilité thermique, conductivité thermique, densité et viscosité dynamique,
    le dispositif de mesure de débit thermique (1, 21) comprenant une unité d'exploitation, laquelle sert à déterminer la vitesse d'écoulement et/ou le débit du produit s'écoulant à travers le tube de mesure (2, 22) sur la base de la puissance requise au fonctionnement du capteur de température chauffé (14, 34) et de la différence de température entre les au moins deux capteurs de température (13, 14, 33, 34) à l'aide des propriétés déterminées du produit, et l'unité d'exploitation comprenant un moyen servant à effectuer un calcul d'une courbe caractéristique sur la base des propriétés déterminées du produit, la courbe caractéristique étant une ligne caractéristique, cette ligne caractéristique servant à établir une relation fonctionnelle entre la puissance requise au fonctionnement du capteur de température chauffé (14, 34) et le débit du produit s'écoulant à travers le tube de mesure (2, 22).

2. Dispositif de mesure de débit thermique (1, 21) selon la revendication 3, **caractérisé en ce que** le dispositif de mesure de débit thermique (1, 21) est conçu pour effectuer la détermination des propriétés du produit et le calcul d'une courbe caractéristique dans une période de temps qui est inférieure à 1 s, de préférence inférieure à 30 ms.

3. Dispositif de mesure de débit thermique (1, 21) selon l'une des revendications précédentes, **caractérisé en ce que** l'au moins un capteur (10, 11, 30, 31) détermine respectivement une valeur parmi les propriétés du produit suivantes : conductibilité thermique, capacité thermique, densité et viscosité dynamique ou conductibilité thermique, conductivité thermique, densité et viscosité dynamique.

4. Dispositif de mesure de débit thermique (1, 21) selon l'une des revendications précédentes, **caractérisé en ce que** l'au moins un capteur (10, 11, 30, 31) ou tous les capteurs (10, 11, 30, 31) destinés à la détermination de la conductibilité thermique et/ou de la capacité thermique et/ou de la conductivité thermique et/ou de la densité et/ou de la viscosité dynamique du produit sont disposés dans ou sur un bypass (4) du tube de mesure (2, 22).

5. Dispositif de mesure de débit thermique (1, 21) selon l'une des revendications précédentes, **caractérisé en ce que** l'au moins un capteur (10, 11, 30, 31) ou tous les capteurs (10, 11, 30, 31), destinés à la détermination de la conductibilité thermique et/ou de la capacité thermique et/ou de la conductivité thermique et/ou de la densité et/ou de la viscosité dynamique du produit sont intégrés dans le tube de mesure (2, 22).

6. Dispositif de mesure de débit thermique (1, 21) selon la revendication 7, **caractérisé en ce que** l'au moins un capteur (10, 11, 30, 31) ou tous les capteurs (10, 11, 30, 31) sont disposés sur un insert de mesure (25) en forme de tige, lequel fait saillie dans le tube de mesure (2, 22), notamment radialement dans le tube de mesure (2, 22).

**7.** Procédé destiné à la détermination et/ou à la surveillance d'un débit d'un produit s'écoulant à travers un tube de mesure (2, 22) au moyen du dispositif de mesure de débit (1, 21) selon l'une des revendications 1 à 6, comprenant les étapes suivantes :

- Détermination d'une valeur pour chacune des propriétés du produit suivantes :

conductibilité thermique, capacité thermique, densité et viscosité dynamique ou conductibilité thermique, conductivité thermique, densité et viscosité dynamique,

- Calcul d'une courbe caractéristique à partir de valeurs liées aux propriétés du produit,
- Détermination du débit du produit mesuré sur la base de la courbe caractéristique et de la puissance requise au fonctionnement du capteur de température chauffé (14, 34) et de la différence de température entre les au moins deux capteurs de température (13, 14, 33, 34).

**8.** Procédé selon la revendication 7, **caractérisé en ce que** les valeurs déterminées se rapportant aux propriétés du produit, sont déterminées lors de mesures récurrentes continues ou discontinues et **en ce qu'**un ajustement de la valeur rapportée au débit a lieu sur la base des valeurs actuellement déterminées se rapportant aux propriétés du produit.

**9.** Utilisation d'un dispositif de mesure de débit thermique (1, 21) selon l'une des revendications 1-6 avec un procédé selon l'une des revendications 7-8, lequel dispositif est destiné à déterminer la vitesse d'écoulement d'un produit avec une composition variable dans le temps, et/ou lequel est destiné à détecter un changement de produit pendant le mode de mesure du dispositif de mesure de débit thermique (1, 21).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69229799 T2

**In der Beschreibung aufgeführte Nicht-Patentliteratur**

- **G.PAUL et al.** *Renewable and Sustainable Energy Reviews,* 2010, vol. 14, 1913-1924

- **WAKEHAM et al.** A review of vibrating objects for the measurement of density and viscosity in oilfields including devices fabricated by the method of MEMS. *High Temperatures - High Pressures,* vol. 37, 137-151